# EUROPEAN PATENT SPECIFICATION

(11) **EP 2 255 898 B1**
(45) Date of publication and mention of the grant of the patent: **30.03.2016**
(21) Application number: 10005274.5
(22) Date of filing: 20.05.2010
(51) Int. Cl.: B08B 15/00, B08B 15/02, B23K 9/32, B23K 3/08

(54) **Fume suction unit**
Rauchabsauganlage
Unité d'aspiration de la fumée

(30) Priority: 29.05.2009 JP 2009130258
(43) Date of publication of application: 01.12.2010
(73) Proprietor: Hakko Corporation, Osaka-shi, Osaka 556-0024 (JP)
(72) Inventor: Ishihara, Toshinobu, Osaka-shi Osaka (JP)
(74) Representative: Müller-Boré & Partner Patentanwälte PartG mbB

(56) References cited:
- EP-A1- 0 401 436
- EP-A1- 0 440 090
- DE-A1- 3 126 690
- DE-A1- 19 810 818
- FR-A1- 2 128 042
- JP-A- 11 038 328
- JP-A- H02 150 646
- US-A- 4 434 711
- US-B1- 6 776 708

## Description

### BACKGROUND OF THE INVENTION

### 1. Field of the Invention

The present invention relates to a fume suction unit capable of sucking fumes, such as fumes generated from solder during a soldering operation.

### 2. Description of the Background Art

As the above fume suction unit, there has been known a type which comprises a housing having a suction port and a discharge port, and a suction fan provided inside the housing in a rotationally driven manner (see, for example, JP 11-38328A).

A fume suction unit in accordance with the preamble of claim 1 disclosed in the JP 11-38328A is attached to a table for performing a soldering operation thereon and adapted to suck fumes generated from solder during the soldering operation. This fume suction unit is fixed onto the table, and thereby an inclination, a position, etc., thereof, cannot be changed, so that a suction characteristic of the fume suction unit cannot be changed. Thus, the suction characteristic has to be changed, for example, by replacing the suction fan with a type having a larger fan blade or by using means for switching between different rotation speeds of the suction fan. However, a cost of the fume suction unit will be undesirably increased.

DE 198 10 818 discloses a mobile extractor, which is to be positioned over a cooking unit on which food is being prepared and fumes and moisture are drawn into a duct into a ventilation and filter unit to be discharged. The height and reach of the hood of the mobile extractor is variable.

FR 2 128 042 disclose an extractor hood including a turbine sucking fumes and particulates suspended in an opening to push them into the fold of a well alveolar molding disposed baffles, where the particles settle and condense the vapors, recycled by condensing an air stream exiting by suitable holes at the top and around the box.

DE 31 26 690 A1 discloses an extraction including a housing, which has a suction surface on its front side, and of a cover cowl, which covers the suction surface. By means of the attachment of a cover cowl in front of the suction surface, the sucked air is diverted so that air suction can take place from all sides.

JP 02150646 discloses a suction fan, wherein contaminated air is sucked into a hood through a suction inlet provided in a main body and clean air is sucked into hood through slits opened in a cylindrical wall in an axial direction. The clean air forms a spiral flow along the inner surface of the cylindrical wall. The spiral flow is formed inside, by suction of air through an air suction hole, a core section with a negative pressure and, as a result, an artificial tornado is formed. By virtue of the artificial tornado contaminated air is sucked into the main body of the hood at an almost uniform velocity at all points of the suction inlet, and then discharged out of the hood speedily through the air suction hole.

### SUMMARY OF THE INVENTION

It is an object of the present invention to provide a fume suction unit capable of switching between different suction characteristics without changing capabilities of a suction fan.

According to the present invention, in accordance with claim 1 there is provided a fume suction unit including a suction fan, a casing covering the suction fan, and drive means for driving the suction fan. The casing comprises a discharge-side end surface portion located on a discharge side of the suction fan and having a discharge port, a side surface portion connected with a peripheral edge of the discharge-side end surface portion and covering a periphery of the suction fan, a first suction section located on a suction side of the suction fan and having a passage communicated with an internal space of the side surface portion;
characterized in that it comprises
a second suction section provided to be communicated with the internal space of the side surface portion and having a suction characteristic different from that of the first suction section, and
the fume suction unit comprises a first suction wall formed in a ring shape extending over an entire periphery of the side surface portion and protruding from the side surface portion toward a side opposite to the discharge-side end surface portion, the first suction wall having a flared shape which gradually expands toward the side opposite side opposite to the discarge-side end surface portion; and a pair of second suction walls each formed to extend across the side surface portion and the first suction wall,
the first suction wall has a partition wall portion located between the pair of second suction walls;
the first suction section has a first passage which comprises a first suction port formed by peripheral end of the first suction wall formed to be located on the rame plane and a space surrounded by the first suction wall and the first passage provides communication between the surrounded space and the internal space of the side surface portion; and
the second suction section has a second passage which comprises a space between the pair of second suction walls as a second suction port and provides communication between the second suction port and the internal space of the side surface portion via a communication hole formed in the partition wall portion,
the fume suction unit is adapted to switch between a first usage mode to perform suction from a second suction port of the second suction section via communication hole under a condition that the peripheral end of the first suction wall is placed on a loading surface so that the casing is turned down to allow the first suction port of the first suction section to be oriented downwardly and no gap is formed between the loading surface and the peripheral end, and a second usage mode to perform suction from the first suction port under a condition that the casing is erected where the fume suction unit is placed on a loading surface in such a manner that ends of the second suction walls are located on the side of the loading surface.

### BRIEF DESCRIPTION OF THE DRAWINGS

FIG. 1 is an external perspective view showing a fume suction unit according to a first embodiment of the present invention, wherein the fume suction unit is in a first usage mode A.
FIG. 2 is a sectional view taken along the line II-II in FIG 1.
FIG. 3 is an external perspective view showing the fume suction unit according to the first embodiment, wherein the fume suction unit is in a second usage mode B.
FIG. 4 is an external perspective view showing the fume suction unit according to the first embodiment, when viewed from an obliquely upper position on a rear side thereof, wherein the fume suction unit is in the second usage mode B.
FIG. 5 is a side view showing the fume suction unit according to the first embodiment, wherein the fume suction unit is in the second usage mode B (a right side view of the fume suction unit in FIG. 3).
FIG. 6 is an external perspective view showing a fume suction unit according to a third embodiment of the present invention, wherein the fume suction unit is in a third usage mode C.
FIG 7 is an external perspective view showing the fume suction unit according to the third embodiment, wherein the fume suction unit is in the third usage mode C, and an attachment position of a cover is changed from that in FIG. 6.
FIG 8 is an external perspective view showing a fume suction unit according to a second embodiment of the present invention, when viewed from a discharge side thereof.
FIG. 9 is a side view, partially broken away, showing the fume suction unit in FIG. 8.

### DESCRIPTION OF THE PREFERRED EMBODIMENTS

The present invention will now be specifically described based on an embodiment thereof.

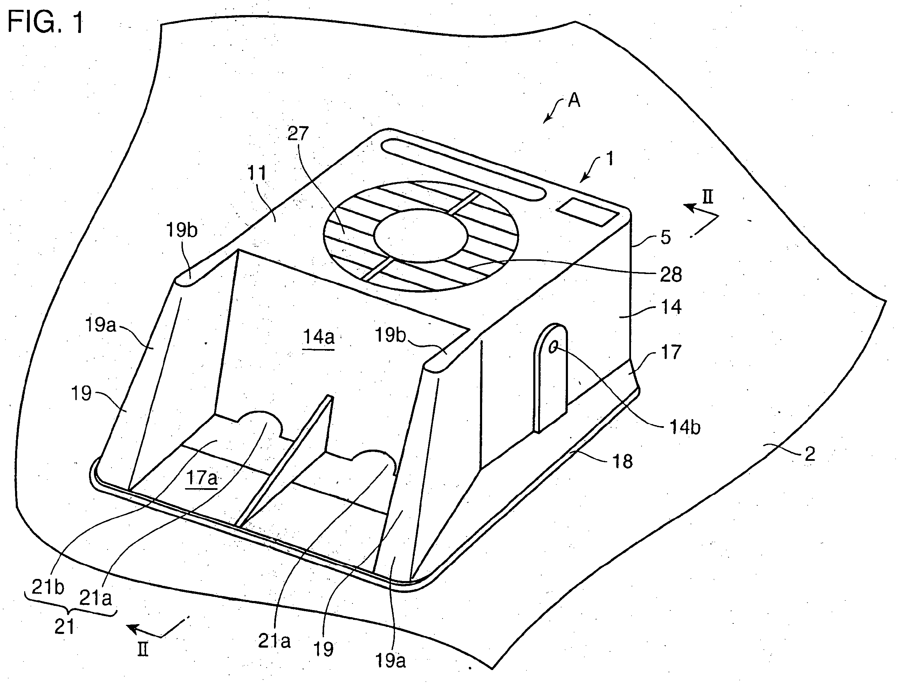

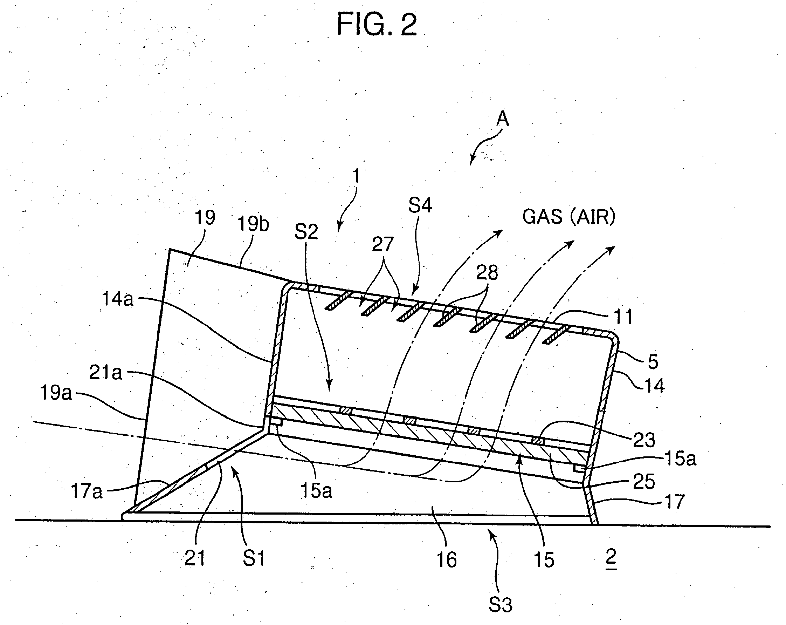

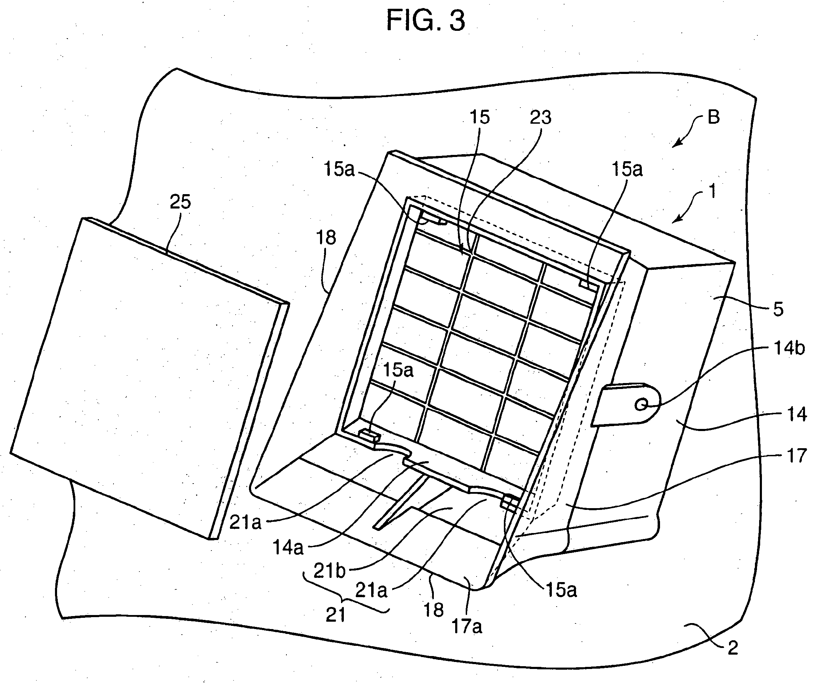

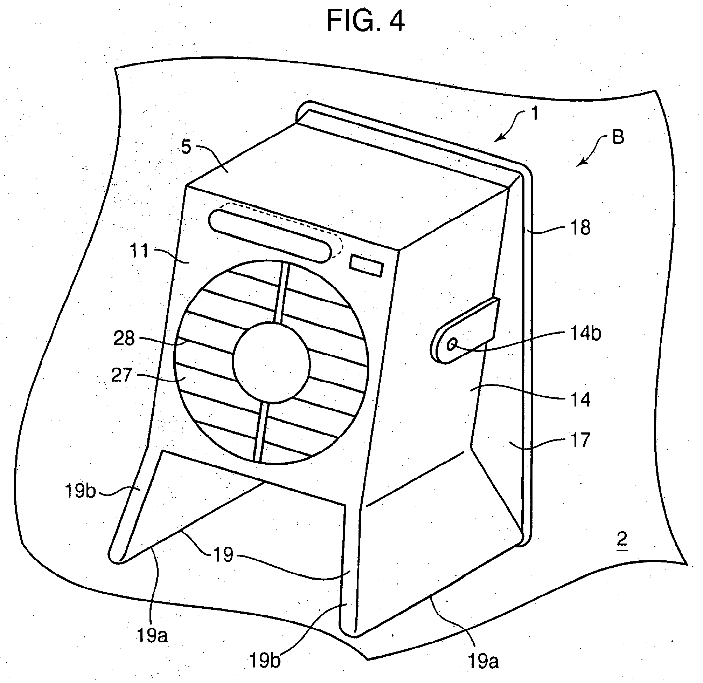

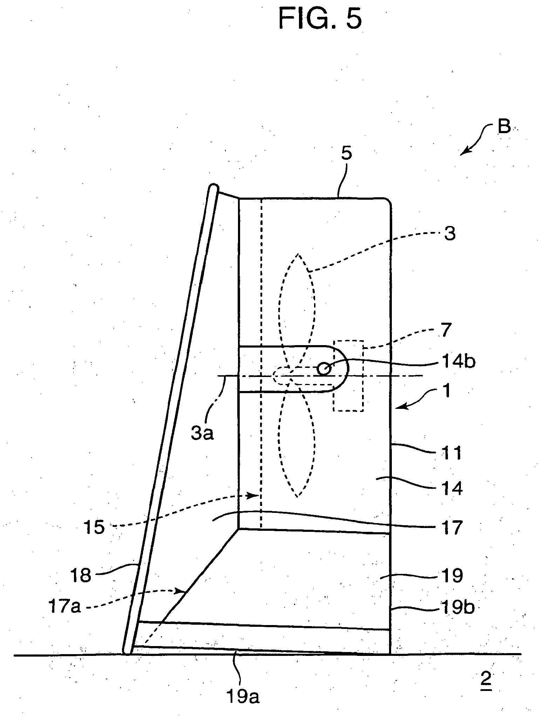

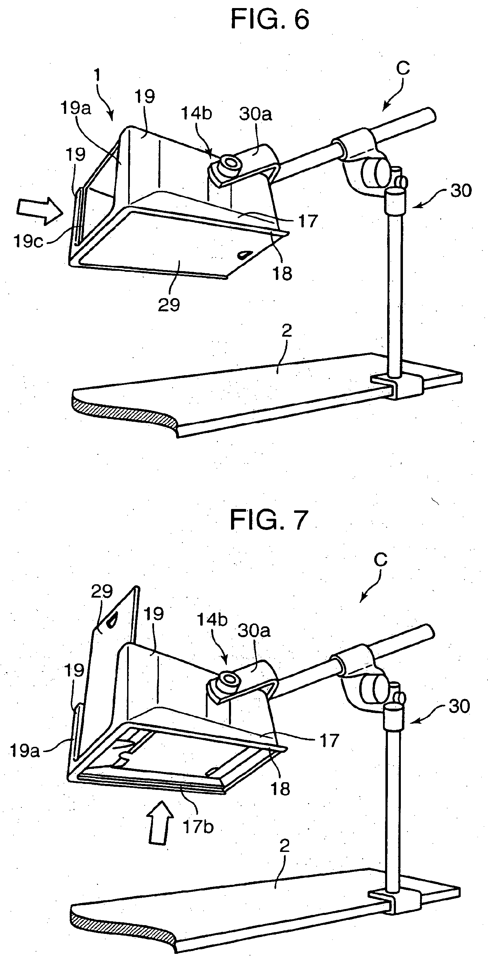

FIG. 1 shows a fume suction unit according to a first embodiment of the present invention. Specifically, FIG 1 is a perspective view showing an external appearance of the fume suction unit according to the first embodiment, in a first usage mode A. FIG. 2 is a sectional view taken along the line II-II in FIG 1. FIG. 3 is a perspective view showing the fume suction unit in a second usage mode B. FIG 4 is a perspective view showing the fume suction unit in the second usage mode B, when viewed from an obliquely upper position on a rear side thereof, and FIG. 5 is a side view showing the fume suction unit in the second usage mode B (a right side view of the fume suction unit in FIG. 3). FIG 6 is a perspective view showing a fume suction unit according to a third embodiment of the present invention, in a third usage mode. In FIG. 2, a suction fan and drive means are omitted.

The fume suction unit 1 according to the first embodiment is equipped with a suction fan 3, a casing 5 covering the suction fan 3, and drive means 7 for rotationally driving the suction fan 3. The fume suction unit 1 according to the first embodiment can be used in three usage modes consisting of a first usage mode A illustrated in FIGS. 1 and 2, a second usage mode B illustrated in FIGS. 3 and 4, and a third usage mode using a stand 30 (see FIG. 6) (in the first embodiment, the third usage mode is not illustrated). An electric motor is used as the drive means 7 (see FIG. 5).

The casing 5 comprises a rectangular-shaped discharge-side end surface portion 11 facing a discharge side of the suction fan 3, a side surface portion 14 connected with a peripheral edge of the discharge-side end surface portion 11 and covering a periphery of the suction fan 3, and a filter-mounting portion 15 provided on a suction side of the suction fan 3.

The side surface portion 14 is disposed between the discharge-side end surface portion 11 and the filter-mounting portion 15 to cover the suction fan 3 and the motor. In the first embodiment, the side surface portion 14 is formed to have a rectangular frame shape in cross-section in a direction perpendicular to an axis 3a of the suction fan 3. The side surface portion 14 has a pair of depressions 14b provided in respective ones of laterally opposed outer surfaces thereof to serve as an attachment portion. The depressions 14b are adapted to allow a generally C-shaped mounting bracket 30a of the stand 30 to be attached thereto (see FIG. 6). In other words, the depressions 14b are used to fix the casing 5 to the stand 30. The depressions 14b are provided in respective ones of a pair of lateral (right and left in FIG 1) side surface sub-portions located adjacent to an after-mentioned side surface sub-portion 14a. In combination with the stand 30, the fume suction unit 1 can be used, for example, under a condition that it is inclined at a desired angle, while being spaced from a loading surface 2 of a table or the like. Thus, the fume suction unit 1 can be used in the third usage mode C.

A first suction wall 17 is formed along an end of the side surface portion 14 on the side of the filter-mounting portion 15 (on the suction side of the suction fan 3). Specifically, the first suction wall 17 is formed in a ring shape which extends over the entire periphery of the rectangular frame-shaped side surface portion 14 and protrudes from the end of the side surface portion 14 toward a side opposite to the discharge-side end surface portion 11. The first suction wall 17 has a flared shape which gradually expands toward the side opposite to the discharge-side end surface portion 11. An inner or base end of the first suction wall 17 is connected with the side surface portion 14, and a space surrounded by the first suction wall 17 is communicated with an internal space of the side surface portion 14 through the base end of the first suction wall 17. A distal end (an end on an opposite side of the side surface portion 14) or peripheral end 18 of the first suction wall 17 forms a first suction port where the space surrounded by the first suction wall 17 is opened. The first suction port and the space surrounded by the first suction wall 17 make up a first passage, so that the first suction port is communicated with the internal space of the side surface portion 14 via the first passage. When the suction fan 3 is driven, the first suction port as an outer end of the first passage introduces outside air into the first passage therethrough. This means that the fume suction unit 1 has a first suction section which comprises the first passage located on the suction side of the suction fan 3 and communicated with the internal space of the side surface portion 14.

Further, a pair of second suction walls 19, 19 are provided on one 14a of four side surface sub-portions of the side surface portion 14, and a first suction sub-wall 17a of the first suction wall 17, the first suction sub-wall 17a being connected to the side surface sub-portion 14a. Specifically, each of the second suction walls 19, 19 is formed to extend across the side surface sub-portion 14a and the first suction sub-wall 17a, and protrude from the side surface sub-portion 14a by a given length. Each of the second suction walls 19, 19 is formed parallel to the axis 3a of the suction fan 3 and on a respective one of laterally opposite sides of each of the side surface sub-portion 14a and the first suction sub-wall 17a. A space between respective outer ends of the second suction walls 19, 19 functions as a second suction port. Specifically, the second suction port comprises a region between respective discharge-side ends 19b, 19b of the second suction walls 19, 19, and a region between respective ends 19a, 19a of the second suction walls 19, 19 located on an opposite side of the side surface sub-portion 14a.

The first sub-wall 17a of the first suction wall 17 located between the second suction walls 19, 19 makes up a partition wall portion located between the two suction ports (first and second suction ports). The partition wall portion 17a is formed with a communication hole 21 providing communication between the two suction ports. Specifically, the communication hole 21 serves as a means to provide communication between a second passage and the first passage, wherein the communication hole 21 comprises a rectangular-shaped hole 21b formed in the partition wall portion 17a, and a pair of semicircular-shaped cutouts 21a, 21a each formed in a suction-side end of the side surface sub-portion 14a of the side surface portion 14 in such a manner as to be communicated with the hole 21b. The hole 21b may have a width less than that of the partition wall portion 17a. Further, the hole 21b may have any suitable shape other than a rectangular shape, such as a circular shape. The number of the cutouts 21a is not limited to two, but may be one, or three or more. Further, the cutout 21a may have any suitable shape other than a semicircular shape, such as a rectangular shape. As shown in FIG 5, the partition wall portion 17a is inclined to gradually come away from the axis 3a of the suction fan 3 in a direction from the suction-side end of the side surface sub-portion 14a toward the peripheral end 18.

The second suction port comprising the region between the ends 19b, 19b and the region between the ends 19a, 19a is communicated with the internal space of the side surface portion 14, via a second passage and the first passage, wherein the second passage comprises a space between the second suction walls 19, 19 and the communication hole 21. This means that the fume suction unit 1 has a second suction section which comprises the second suction port and the second passage. As above, the second suction section is provided in a position different from that of the first suction section. In an operation of introducing air into an internal space of the casing 5 via the second passage, the first passage is used as a part of an air flow path. Specifically, external air is introduced from the second suction port, and, after passing through the communication hole 21, sent to the internal space of the side surface portion 14 via the space surrounded by the first suction wall 17 (first passage).

An opening area (S1) of the communication hole 21 is designed to be sufficiently less than each of an opening area (S2) of the internal space of the side surface portion 14, and an opening area (S4) of an after-mentioned discharge port 27 (see FIG. 2). Further, the opening area (S2) of the internal space of the side surface portion 14 is designed to be less than an opening area (S3) of the first suction port (see FIG. 2). Thus, the opening area (S1) of the communication hole 21 is less than the opening area (S3) of the first suction port.

In the second usage mode B, the fume suction unit 1 is placed on a loading surface 2 of a table or the like in such a manner that the ends 19a, 19a of the second suction walls 19, 19 are located on the side of the loading surface 2. Each of the ends 19a, 19a is formed to have a surface approximately perpendicular to the discharge-side end surface portion 11 and the filter-mounting portion 15. Thus, in the second usage mode B, the ends of the side surface portion 14 on the suction and discharge sides of the suction fan 3 are located opposed to each other in an approximately horizontal direction, As above, in the second usage mode B, the fume suction unit 1 stands by itself under a condition that the ends 19a, 19a are placed on the loading surface 2.

The peripheral end 18 of the first suction wall 17 is formed to be located on the same plane. Thus, in the first usage mode A where the fume suction unit 1 is used under a condition that the peripheral end 18 of the first suction wall 17 is placed on the loading surface 2, no gap is formed between the loading surface 2 and the peripheral end 18. In the first usage mode A, the ends of the side surface portion 14 on the suction and discharge sides of the suction fan 3 are located opposed to each other in an approximately vertical direction (see FIG. 2).

The filter-mounting portion 15 is formed to have a rectangular frame shape in cross-section in a direction perpendicular to the axis 3a of the suction fan 3, as with the side surface portion 14, and an inward region thereof is formed as a hollow space. A grid-shaped grill 23 is provided inside the filter-mounting portion 15, and a filter 25 is attached on an outside of the grill 23. A protrusion 15a is formed on each of four corners of the filter-mounting portion 15 on the side of the first suction wall 17 to protrude inwardly so as to prevent drop-off of the filter 25. In place of the protrusion 15a, any other suitable structure for preventing drop-off of the filter 25 may be used. As the filter 25, a type having specific characteristics is used depending on a usage environment.

The discharge-side end surface portion 11 is formed with a discharge port 27, and a large number of fins 28 are formed along the discharge port 27 to control a direction of discharge air. When the fume suction unit 1 is set in the first usage mode A, each of the fins 28 is inclined to discharge gas upwardly and toward a side opposite to the second suction port. The fins 28 are disposed parallel to each other, and a space between adjacent ones of the fins 28 functions as the discharge port 27.

As shown in FIG. 5, when the above fume suction unit 1 according to the first embodiment is in the second usage mode B where it is placed on the loading surface 2 under a condition that the second suction walls 19, 19 are oriented downwardly, gas on the loading surface 2 (for example, air containing fumes during a soldering operation) is sucked from the first suction port (an opening on an inward side of the peripheral end 18 of the first suction wall 17) according to driving of the suction fan 3. The sucked gas is sent to the internal space of the side surface portion 14 via the first passage, and discharged from the discharge port 27 to an outside of the casing 5 obliquely upwardly (for example, in a direction away from an operator). The first passage has a relatively large cross-sectional area over the entire length thereof. Thus, in the second usage mode B, even if the second suction port (between the discharge-side ends 19b, 19b) is not closed, an amount of gas to be sucked from the second suction port is negligibly small, if any.

In the first usage mode A where the fume suction unit 1 is placed on the loading surface 2 under a condition that the first suction wall 17 is oriented downwardly, gas on the loading surface 2 (for example, air containing fumes during a soldering operation) is sucked from the second suction port (the region between the ends 19b, 19b and the region between the ends 19a, 19a) according to driving of the suction fan 3. The sucked gas flows from the second passage into the first passage through the communication hole 21, and then discharged from the discharge port 27 to an outside of the casing 5 obliquely upwardly (for example, in a direction away from an operator), via the internal space of the side surface portion 14. As mentioned above, the opening area (S1) of the communication hole 21 is less than each of the opening area (S2) of the internal space of the side surface portion 14 and the opening area (S3) of the first suction port. Thus, in the first usage mode A, a gas suction speed can be increased as compared with the second usage mode B where only the first passage is used. In this case, it is preferable that the opening area (S1) is set to be sufficiently less than the opening area (S2), in view of increasing the suction speed. Further, in the first usage mode A, a center of a vertical width of the communication hole 21 is located at a position closer to the loading surface 2 as compared with a center of a vertical width of the first passage (the space surrounded by the first suction wall 17) in the second usage mode B, and a vertical width of a space to be subjected to suction through the second suction port can be reduced to allow the loading surface 2 to function as a guide plate. This makes it possible to effectively increase the gas suction speed.

As above, in the fume suction unit 1 according to the first embodiment, one of the first usage mode A and the second usage mode B can be selected to switch between different suction characteristics without changing capabilities of the suction fan 3.

Further, in the fume suction unit 1 according to the first embodiment, the peripheral end 18 of the first suction wall 17 is formed to be located on the same plane. Thus, in the first usage mode A, no gap is formed between the loading surface 2 and the peripheral end 18, which makes it possible to fully close the first suction port (the opening on the inside of the peripheral end 18 of the first suction wall 17).

In the fume suction unit 1 according to the first embodiment, the filter 25 is provided to the filter-mounting portion disposed at a position on the suction side of the side surface portion 14. Thus, fumes and odors sucked from the first or second suction port can be reduced or eliminate by the filter 25.

In the fume suction unit 1 according to the first embodiment, the partition wall portion 17a is inclined to gradually come away from the axis 3a of the suction fan 3 in the direction from the suction-side end of the side surface portion 14 toward the peripheral end 18. Thus, in the second usage mode B where gas is sucked from the first suction port, the partition wall portion 17a can serve as a means to guide the gas to the suction side of the side surface portion 14. In the first usage mode A where gas is sucked from the second suction port, the partition wall portion 17a can serve as a means to guide the gas to the communication hole 21.

The first embodiment has been described based on one example designed to switch between the first usage mode A where the fume suction unit 1 is placed on the loading surface 2 under a condition that the casing 5 is turned down to allow the first suction port (the peripheral end 18 of the first suction wall 17) to be oriented downwardly, so as to perform suction from the second suction port, and the second usage mode B where the fume suction unit 1 is placed on the loading surface 2 under a condition that the casing 5 is erected to allow the pair of second suction walls 19, 19 to be oriented downwardly, so as to perform suction from the first suction port. However, the present invention is not limited to the above usage modes. For example, the fume suction unit 1 may also be used in the third usage mode where it is attached to the stand 30. In the third usage mode, the fume suction unit 1 according to the first embodiment devoid of after-mentioned opening/closing means is simply disposed at a relatively high position by the stand 30 and used with a suction characteristic equivalent to that in the second usage mode B. Differently, as in a fume suction unit according to a third embodiment of the present invention (see FIGS. 6 and 7), opening/closing means may be employed to switch between a sub-mode where gas is sucked from the first suction port and a sub-mode where gas is sucked from the second suction port.

As the opening/closing means, a flat plate-shaped cover 29 as shown in FIG. 6 may be used. In the third embodiment, a pair of guide grooves 17b, 17b (see FIG. 7) are formed in an inner surface of the first suction wall 17 to extend along the peripheral end 18, in such a manner as allow the cover 29 to be inserted therein. Thus, the cover 29 can be attached along the guide grooves 17b, 17b to close the first suction port (the opening on the inward side of the peripheral end 18 of the first suction wall 17). This makes it possible to achieve a gas-flow state equivalent to that in the first usage mode A. Further, in the third embodiment, a pair of guide grooves 19c, 19c (see FIG. 6) are formed in respective ones of opposed surfaces of the second suction walls 19, 19 to extend along corresponding ones of the ends 19a, 19a in such a manner as allow the cover 29 to be inserted therein. Thus, the cover 29 detached from the guide grooves 17b, 17b of the first suction port can be attached along the guide grooves 19c, 19c to almost close the second suction port, as shown in FIG 7. This makes it possible to achieve a gas-flow state equivalent to that in the second usage mode B. In the third embodiment, the cover 29 is commonly used in the sub-mode for achieving the gas-flow state equivalent to that in the first usage mode A and the sub-mode for achieving the gas-flow state equivalent to that in the second usage mode B, so that there is not any risk of missing the cover 29.

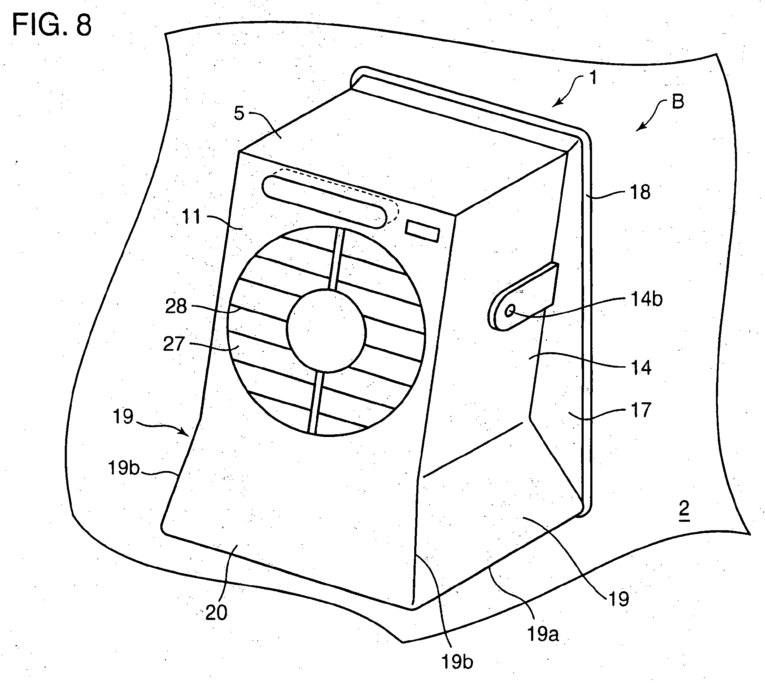

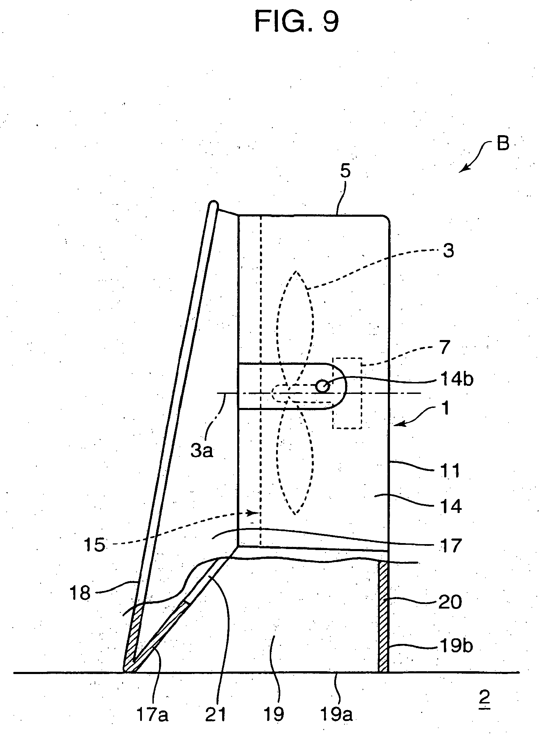

In the region between the discharge-side ends 19b, 19b and the region between the ends 19a, 19a constituting the second suction port in the first and second embodiment, it is preferable that the former (the region between the discharge-side ends 19b, 19b) is closed by an auxiliary wall 20 having the same protruding length as that of each of the second suction walls 19, 19, as in a fume suction unit according to a second embodiment of the present invention illustrated in FIGS. 8 and 9. The auxiliary wall 20 is formed to mutually connect the ends of the second suction walls 19, 19 on a side opposite to the first suction wall 17. In the second embodiment having the auxiliary wall 20, the second suction port consists only of the latter (the region between the ends 19a, 19a). In this case, the sub-mode for achieving for achieving the gas-flow state equivalent to that in the second usage mode B as shown in FIG. 7, the second suction port can be fully closed by the cover 29.

In the third usage mode C using the stand 30, a space underneath the casing 5 can be utilized for a soldering operation.

In the third embodiment illustrated in FIGS. 6 and 7, the cover 29 is employed as the opening/closing means for, in the third usage mode, switching between the gas-flow state equivalent to that in the first usage mode A and the gas-flow state equivalent to that in the second usage mode B. Alternatively, any other suitable structure may be employed.

Further, although the side surface portion 14 in the above embodiments is formed in a rectangular frame shape in cross-section, the present invention is not limited thereto, but the side surface portion may be formed in any other suitable cross-sectional shape. For example, the side surface portion may be formed in a circular frame shape or a polygonal frame shape in cross-section.

Although the above embodiments have been described by taking a fume suction unit for use in transferring fumes generated during a soldering operation away from an operator, as an example, the fume suction unit of the present invention may be used in various operations other than the soldering operation.

### [Summary of Embodiments]

The above embodiments can be summarized as follows.
(1) The fume suction unit according to each of the above embodiments can be used by selecting one of a mode for suction gas from the first suction section and a mode for sucking gas from the second suction section. In this case, each of the first suction section and the second suction section has a different suction characteristic, so that a suction characteristic varies depending on the suction section to be selected. This makes it possible to switch between different suction characteristics, without changing parameters of the suction fan, such as rotation speed, i.e., even if a suction capability of the suction fan is maintained constant.
(2) The above fume suction unit further comprises a first suction wall protruding from the side surface portion toward a side opposite to the discharge-side end surface portion, and a pair of second suction walls each formed to extend across the side surface portion and the first suction wall, wherein: the first suction wall has a partition wall portion located between the pair of second suction walls; the first suction section has a first passage which comprises a first suction port and a space surrounded by the first suction wall and provides communication between the surrounded space and the internal space of the side surface portion; and the second suction section has a second passage which comprises a space between the pair of second suction walls as a second suction port and provides communication between the second suction port and the internal space of the side surface portion via a communication hole formed in the partition wall portion, and wherein at least one of the first suction section and the second suction section is adapted to be selectively used.
   In this case, the first suction section can be selected to use the first passage, and the second suction section can be selected to use the second passage having the communication hole.
(3) Preferably, in the above fume suction unit, the communication hole has an opening area less than that of the internal space of the side surface portion.
   In this case, a suction speed during selective use of the second passage can be increased as compared with that during selective use of the first passage. This makes it possible to suck fumes farther away.
(4) More preferably, in the above fume suction unit, the opening area of the communication hole is less than that of the first suction port.
   In this case, the suction speed during selective use of the second passage can be more reliably increased as compared with that during selective use of the first passage.
(5) The above fume suction unit may comprise an auxiliary wall formed between respective discharge-side ends of the pair of second suction walls to have a same protruding length as that of the second suction wall, wherein the second suction port is formed by the pair of second suction walls, the auxiliary wall and the partition wall portion.
   In this case, in an operation of sucking gas via the first suction section, the second suction port can be almost closed.
(6) Preferably, in the above fume suction unit, the fume suction unit is configured such that the first passage is selectively used under a condition that respective ends of the pair of second suction walls on an opposite side of the side surface portion are oriented downwardly and placed on a loading surface, and the second passage is selectively used under a condition that the first suction wall is oriented downwardly and placed on a loading surface.
   In this case, the ends of the pair of second suction walls on an opposite side of the side surface portion can be placed on the loading surface to selectively use the first passage, and the first suction wall can be placed on the loading surface to selectively use the second passage.
(7) In the above fume suction unit, a peripheral end of the first suction wall defining the first suction port is formed to be located on a same plane.
   In this case, the first suction port can be almost fully closed by placing the peripheral end of the first suction wall on the loading surface.
(8) Preferably, in the above fume suction unit, the partition wall portion is inclined to gradually come away from an axis of the suction fan in a direction from a suction-side end of the side surface portion toward the peripheral end.
   In this case, during an operation of sucking air via the first passage, the air can be guided to a suction-side opening of the side surface portion by the partition wall portion.
(9) The above fume suction unit may comprise opening/closing means for closing one of the first suction port and the second suction port of the casing.
   In this case, the first suction port can be closed by the opening/closing means to allow air sucked from the second suction port to be sent to the internal space of the side surface portion via the second passage. Further, the second suction port can be closed by the opening/closing means to allow air sucked from the first suction port to be sent to the internal space of the side surface portion via the first passage.
(10) Preferably, in the above fume suction unit, the opening/closing means is adapted to be commonly used for opening/closing of the first suction port and opening/closing of the second suction port.
   In this case, a risk of missing the opening/closing means can be eliminated.
(11) Preferably, in the above fume suction unit, the casing has an attachment portion for attachment to a stand.
   In this case, the casing can be attached to the stand to allow a space underneath the casing to be utilized for a soldering operation.

## Claims

1. A fume suction unit comprising:
a suction fan (3);
a casing (5) covering the suction fan (3); and
drive means for driving the suction fan (3);
wherein the casing (5) comprises a discharge-side end surface portion (11) located on a discharge side of the suction fan (3) and having a discharge port (27), a side surface portion (14) connected with a peripheral edge of the discharge-side end surface portion (11) and covering a periphery of the suction fan (3), a first suction section located on a suction side of the suction fan (3) and having a passage communicated with an internal space of the side surface portion (14);
**characterized in that** it comprises
a second suction section provided to be communicated with the internal space of the side surface portion (14) and having a suction characteristic different from that of the first suction section, and
the fume suction unit comprises a first suction wall (17) formed in a ring shape extending over an entire periphery of the side surface portion (14) and protruding from the side surface portion (14) toward a side opposite to the discharge-side end surface portion (11), the first suction wall (17) having a flared shape which gradually expands toward the side opposite to the discharge-side end surface portion (11); and a pair of second suction walls (19, 19) each formed to extend across the side surface portion (14) and the first suction wall (17),
the first suction wall (17) has a partition wall portion (17a) located between the pair of second suction walls (19, 19);
the first suction section has a first passage which comprises a first suction port formed by peripheral end (18) of the first suction wall (17) formed to be located a the sake plane and a space surrounded by the first suction wall (17) and the first passage provides communication between the surrounded space and the internal space of the side surface portion (14); and
the second suction section has a second passage which comprises a space between the pair of second suction walls (19, 19) as a second suction port and provides communication between the second suction port and the internal space of the side surface portion (14) via a communication hole (21) formed in the partition wall portion (17a),
the fume suction unit is adapted to switch between a first usage mode to perform suction from a second suction port of the second suction section via communication hole (21) under a condition that the peripheral end (18) of the first suction wall (17) is placed on a loading surface (2) so that the casing (5) is turned down to allow the first suction port of the first suction section to be oriented downwardly and no gap is formed between the loading surface (2) and the peripheral end, and a second usage mode to perform suction from the first suction port under a condition that the casing (5) is erected where the fume suction unit is placed on a loading surface (2) in such a manner that ends (19a, 19a) of the second suction walls (19, 19) are located on the side of the loading surface (2).

2. The fume suction unit as defined in claim 1, wherein the communication hole (21) has an opening area less than that of the internal space of the side surface portion (14).

3. The fume suction unit as defined in claim 2, wherein the opening area of the communication hole (21) is less than that of the first suction port.

4. The fume suction unit as defined in any one of claims 1 to 3, comprising an auxiliary wall (20) formed between respective discharge-side ends of the pair of second suction walls (19, 19) to have a same protruding length as that of the second suction walls, wherein the second suction port is formed by the pair of second suction walls (19, 19), the auxiliary wall and the partition wall portion (17a).

5. The fume suction unit as defined in any one of claims 1 to 4, wherein:
the fume suction unit is configured such that the first passage is selectively used under a condition that respective ends of the pair of second suction walls (19, 19) on an opposite side of the side surface portion (14) are oriented downwardly and placed on a loading surface; and that
the second passage is selectively used under a condition that the first suction wall (17) is oriented downwardly and placed on a loading surface.

6. The fume suction unit as defined in any one of claims 1 to 5, wherein the partition wall portion (17a) is inclined to gradually come away from an axis of the suction fan (3) in a direction from a suction-side end of the side surface portion (14) toward the peripheral end (18).

## Patentansprüche

1. Eine Rauchabsaugeinheit, die Folgendes umfasst:
ein Absauggebläse (3);
ein Gehäuse (5), welches das Absauggebläse (3) überdeckt; und
Antriebsmittel zum Antrieb des Absauggebläses (3);
wobei das Gehäuse (5) einen auslassseitigen Endflächenabschnitt (11) umfasst, der an einer Auslassseite des Absauggebläses (3) liegt und eine Auslassöffnung bzw. Auslassmündung (27) aufweist, einen seitlichen Flächenabschnitt (14), der mit einer peripheren Kante des auslassseitigen Endflächenabschnitts (11) verbunden ist und eine Peripherie des Absauggebläses (3) abdeckt, einen ersten Absaugabschnitt, der sich an einer Absaugseite des Absauggebläses (3) befindet und einen Durchgang aufweist, der mit einem Innenraum des seitlichen Flächenabschnitts (14) in Verbindung gesetzt wird;
**dadurch gekennzeichnet, dass** sie Folgendes umfasst:
einen zweiten Absaugabschnitt, der bereitgestellt wird, um mit dem Innenraum des seitlichen Flächenabschnitts (14) in Verbindung gesetzt zu werden, und um eine andere Saugcharakteristik als der erste Absaugabschnitt aufzuweisen und
dass die Rauchabsaugeinheit eine erste Saugwand (17) umfasst, die ringförmig ausgebildet ist, die über einen gesamten Umfang des seitlichen Flächenabschnitts (14) verläuft und vom seitlichen Flächenabschnitt (14) zu einer Seite vorsteht, die dem auslassseitigen Endflächenabschnitt (11) gegenüberliegt, wobei die erste Saugwand (17) eine erweiterte Form aufweist, die sich zur Seite hin allmählich ausdehnt, die dem auslassseitigen Endflächenabschnitt (11) gegenüberliegt;
und ein Paar zweite Saugwände (19, 19), die jeweils gebildet werden, um quer über (*across*) dem seitlichen Flächenabschnitt (14) und der ersten Saugwand (17) zu verlaufen,
dass die erste Saugwand (17) einen Trennwandabschnitt (17a) aufweist, der sich zwischen dem Paar von zweiten Saugwänden (19, 19) befindet;
dass der erste Saugabschnitt *(suction section)* einen ersten Durchgang aufweist, der eine erste Absaugmündung umfasst, die vom peripheren Ende (18) der ersten Saugwand (17) gebildet wird, gebildet, um sich auf derselben Ebene zu befinden, und einen Raum, der von der ersten Saugwand (17) umgeben wird, und dass der erste Durchgang eine Kommunikation zwischen dem umschlossenen Raum und dem Innenraum des seitlichen Flächenabschnitts (14) gestattet; und
dass der zweite Saugabschnitt einen zweiten Durchgang aufweist, der zwischen dem Paar von zweiten Saugwänden (19, 19) einen Raum und eine zweite Absaugmündung umfasst und eine Kommunikation zwischen dem zweiten Saugabschnitt und Innenraum des seitlichen Flächenabschnitts (14) über ein Verbindungsloch (21) gestattet, das im Trennwandabschnitt (17a) gebildet wird,
dass die Rauchabsaugeinheit dazu angepasst ist, umzuschalten, zwischen einem ersten Betriebsmodus, zur Durchführung einer Absaugung von einer zweiten Absaugmündung des zweiten Saugabschnitts über das Verbindungsloch (21) unter einer Bedingung, dass das periphere Ende (18) der ersten Saugwand (17) auf einer Ladefläche (2) angeordnet ist, sodass das Gehäuse (5) nach unten gedreht ist, um der ersten Absaugmündung des ersten Saugabschnitts zu ermöglichen, nach unten gerichtet zu sein, und kein Spalt zwischen der Ladefläche (2) und dem peripheren Ende gebildet wird, und einem zweiten Betriebsmodus, zur Durchführung einer Absaugung von der ersten Absaugmündung, unter einer Bedingung, dass das Gehäuse (5) aufgerichtet wird, wo die Rauchabsaugeinheit auf einer Ladefläche (2) derart angeordnet ist, dass sich Enden (19a, 19a) der zweiten Saugwände (19, 19) auf der Seite der Ladefläche (2) befinden.

2. Die Rauchabsaugeinheit nach Anspruch 1, wobei das Verbindungsloch (21) eine Öffnungsfläche aufweist, die geringer als die des Innenraums des seitlichen Flächenabschnitts (14) ist.

3. Die Rauchabsaugeinheit nach Anspruch 2, wobei die Öffnungsfläche des Verbindungslochs (21) geringer als die der ersten Absaugmündung ist.

4. Die Rauchabsaugeinheit nach einem der Ansprüche von 1 bis 3, die eine zusätzliche Wand (20) umfasst, die zwischen entsprechenden auslassseitigen Enden des Paares von zweiten Saugwänden (19, 19) gebildet wird, um eine selbe vorstehende Länge aufzuweisen wie die der zweiten Saugwände, wobei die zweite Absaugmündung durch das Paar von zweiten Saugwänden (19, 19), durch die zusätzliche Wand und durch den Trennwandabschnitt (17a) gebildet wird.

5. Die Rauchabsaugeinheit nach einem der Ansprüche von 1 bis 4, wobei:
die Rauchabsaugeinheit derart konfiguriert ist, dass der erste Durchgang selektiv unter der Bedingung eingesetzt wird, dass entsprechende Enden des Paares von zweiten Saugwänden (19, 19) an einer gegenüberliegenden Seite des seitlichen Flächenabschnitts (14) nach unten gerichtet sind und auf einer Ladefläche angeordnet sind; und dass
der zweite Durchgang selektiv unter der Bedingung eingesetzt wird, dass die erste Saugwand (17) nach unten gerichtet ist und auf einer Ladefläche angeordnet ist.

6. Die Rauchabsaugeinheit nach einem der Ansprüche von 1 bis 5, wobei der Trennwandabschnitt (17a) geneigt ist, um sich allmählich von einer Achse des Absauggebläses (3) in eine Richtung zu entfernen, die vom absaugseitigen Ende des seitlichen Flächenabschnitts (14) ausgeht, in Richtung des peripheren Endes (18).

## Revendications

1. Unité d'aspiration de fumées, comprenant :
un ventilateur d'aspiration (3) ;
un boîtier (5) recouvrant le ventilateur d'aspiration (3) ; et
des moyens d'entraînement pour entraîner le ventilateur d'aspiration (3) ;
sachant que le boîtier (5) comprend une portion de surface d'extrémité côté de décharge (11) située sur un côté de décharge du ventilateur d'aspiration (3) et présentant un orifice *(port)* de décharge (27), une portion de surface latérale (14) raccordée avec un bord périphérique de la portion de surface d'extrémité côté de décharge (11) et recouvrant une périphérie du ventilateur d'aspiration (3), une première section d'aspiration située sur un côté d'aspiration du ventilateur d'aspiration (3) et présentant un passage communiquant avec un espace intérieur de la portion de surface latérale (14) ;
**caractérisé en ce qu'**elle comprend
une deuxième section d'aspiration fournie pour être en communication avec l'espace intérieur de la portion de surface latérale (14) et présentant une caractéristique d'aspiration différente par rapport à celle de la première section d'aspiration, et que
l'unité d'aspiration de fumées comprend une première paroi d'aspiration (17) de forme annulaire qui s'étend sur l'entière une périphérie de la portion de surface latérale (14) et qui saille de la portion de surface latérale (14) vers un côté opposé à la portion de surface d'extrémité côté de décharge (11), la première paroi d'aspiration (17) présentant une forme évasée qui s'élargit progressivement vers le côté opposé à la portion de surface d'extrémité côté de décharge (11) ; et une paire de deuxièmes parois d'aspiration (19, 19), dont chacune est formée pour s'étendre à travers la portion de surface latérale (14) et la première paroi d'aspiration (17),
que la première paroi d'aspiration (17) présente une portion de paroi de séparation (17a) située entre la paire de deuxièmes parois d'aspiration (19, 19) ;
que la première section d'aspiration présente un premier passage qui comprend un premier orifice d'aspiration constitué par l'extrémité périphérique (18) de la première paroi d'aspiration (17), formée pour être située dans le même plan, et un espace entouré par la première paroi d'aspiration (17) et que le premier passage assure la communication entre l'espace entouré et l'espace intérieur de la portion de surface latérale (14) ; et
que la deuxième section d'aspiration présente un deuxième passage qui comprend un espace entre la paire de deuxièmes parois d'aspiration (19, 19) en tant que deuxième orifice d'aspiration et assure la communication entre le deuxième orifice d'aspiration et l'espace intérieur de la portion de surface latérale (14) via un trou de communication (21) formé dans la portion de paroi de séparation (17a),
que l'unité d'aspiration de fumées est adaptée pour commuter entre un premier mode d'utilisation pour effectuer une aspiration à partir d'un deuxième orifice d'aspiration de la deuxième section d'aspiration via le trou de communication (21) à condition que l'extrémité périphérique (18) de la première paroi d'aspiration (17) soit placée sur une surface de chargement (2) de manière que le boîtier (5) soit tourné vers le bas pour permettre au premier orifice d'aspiration de la première section d'aspiration d'être orienté vers le bas et qu'aucun interstice ne soit formé entre la surface de chargement (2) et la surface périphérique, et un deuxième mode d'utilisation pour effectuer une aspiration à partir du premier orifice d'aspiration sous condition que le boîtier (5) soit érigé où l'unité d'aspiration de fumées est placée sur une surface de chargement (2) de manière que des extrémités (19a, 19a) des deuxièmes parois d'aspiration (19, 19) sont situées du côté de la surface de chargement (2).

2. L'unité d'aspiration de fumées telle que définie dans la revendication 1, sachant que le trou de communication (21) présente une superficie d'ouverture inférieure à celle de la surface intérieure de la portion de surface latérale (14).

3. L'unité d'aspiration de fumées telle que définie dans la revendication 2, sachant que la superficie d'ouverture du trou de communication (21) est inférieure à celle du premier orifice d'aspiration.

4. L'unité d'aspiration de fumées telle que définie dans les revendications de 1 à 3, comprenant une paroi auxiliaire (20) formée entre les extrémités respectives, côté de décharge, de la paire de deuxièmes parois d'aspiration (19, 19) pour présenter une même longueur de protubérance que celle des deuxièmes parois d'aspiration, sachant que le deuxième orifice d'aspiration est formé par la paire de deuxièmes parois d'aspiration (19, 19), la paroi auxiliaire et la portion de paroi de séparation (17a).

5. L'unité d'aspiration de fumées telle que définie dans les revendications de 1 à 4, sachant que :
l'unité d'aspiration de fumées est configurée de manière que le premier passage soit sélectivement utilisé sous condition que des extrémités respectives de la paire de deuxièmes parois d'aspiration (19, 19) sur un côté opposé à la portion de surface latérale (14) sont orientées vers le bas et placées sur une surface de chargement ; et que
le deuxième passage soit sélectivement utilisé sous condition que la première paroi d'aspiration (17) est orientée vers le bas et placée sur une surface de chargement.

6. L'unité d'aspiration de fumées telle que définie dans les revendications de 1 à 5, sachant que la portion de paroi de séparation (17a) est inclinée pour s'éloigner progressivement d'un axe du ventilateur d'aspiration (3) dans une direction à partir d'une extrémité côté aspiration de la portion de surface latérale (14) vers l'extrémité périphérique (18).
